# EUROPEAN PATENT APPLICATION

(11) **EP 4 502 825 A1**
(43) Date of publication of application: **05.02.2025**
(21) Application number: 24172573.8
(22) Date of filing: 25.04.2024
(51) Int. Cl.: G06F 16/532, G06F 16/583

(54) **SCENE DETECTION**

(30) Priority: 03.08.2023 IN 202311052298
(71) Applicant: Fujitsu Limited, Kawasaki-shi, Kanagawa 211-8588 (JP)
(72) Inventor: YAMADA, Moyuru, 560037 Bangalore (IN)
(74) Representative: Haseltine Lake Kempner LLP

(57) **Abstract**

A computer-implemented method comprising: based on an input scene graph, generating a plurality of graph vectors; encoding an input image to generate a plurality of image vectors; performing an update process to generate a plurality of updated graph vectors and at least one updated object query vector, comprising: updating the at least one object query vector based on the plurality of graph vectors; updating the at least one object query vector based on the plurality of image vectors; and updating the plurality of graph vectors based on the at least one object query vector; extracting from the at least one updated object query vector a region and a category of the at least one object; and computing a matching score indicating a similarity between the input image and the input scene graph based on the at least one updated object query vector and the plurality of updated graph vectors.

## Description

The present invention relates to image analysis, in particular to image analysis using scene graphs, i.e., scene detection, and there is disclosed herein a computer-implemented method, a computer program, and an information programming apparatus.

Detecting specific objects, actions, and scenes in images and video is in high demand (e.g., for purposes such as image recognition and surveillance, and image and/or video editing for social media posting, news reporting or other real-world applications). The advent of artificial intelligence, machine learning, and neural networks (NNs) has improved techniques for image analysis and object detection and classification. However, there is a need for improvements, for example as new uses arise for such technologies.

In light of the above, a method for scene detection is desired.

According to an embodiment of a first aspect there is disclosed herein a computer-implemented method comprising based on an input/query scene graph, generating a plurality of graph vectors; encoding an input image to generate a plurality of image vectors; performing an update process (decoder processing) to update the plurality of graph vectors and at least one object query vector to generate a plurality of updated graph vectors and at least one updated object query vector, wherein the update process comprises: (iteratively) updating the at least one object query vector based on the plurality of graph vectors (so that the at least one object query vector includes information indicating at least one object in the scene graph); (iteratively) updating the at least one object query vector based on the plurality of image vectors (with information indicating at least one (relevant) object detected in the input image); and (iteratively) updating the plurality of graph vectors based on the at least one object query vector (with information indicating at least one (relevant) object detected in the input image); extracting from the at least one updated object query vector information indicating a region of at least one object (detected in the input image) and a category/class of the at least one object; and computing a matching score indicating a similarity between the (detected at least one object in the) input image and the input scene graph based on (a similarity/correlation between) the at least one updated object query vector and the plurality of updated graph vectors.

The update process may comprise: iteratively updating the at least one object query vector based on the plurality of graph vectors; iteratively updating the at least one object query vector based on the plurality of image vectors; and iteratively updating the plurality of graph vectors based on the at least one object query vector.

(Iteratively) updating the at least one object query vector based on the plurality of graph vectors may comprise updating the at least one object query vector based on the plurality of graph vectors so that the at least one object query vector includes information indicating at least one object in the scene graph.

(Iteratively) updating the at least one object query vector based on the plurality of image vectors may comprise updating the at least one object query vector based on the plurality of image vectors with information indicating at least one (relevant) object detected in the input image.

(Iteratively) updating the plurality of graph vectors based on the at least one object query vector may comprise updating the plurality of graph vectors based on the at least one object query vector with information indicating at least one (relevant) object detected in the input image.

The update process may comprise updating an input matching query vector to generate an updated matching query vector, the updating of the input matching query vector may comprise (iteratively) updating an input matching query vector based on the at least one object query vector and the plurality of graph vectors to generate an updated matching query vector, and computing the matching score may comprise computing the matching score based on the updated matching query vector.

The computer-implemented method may further comprise updating an input matching query vector based on the at least one updated object query vector and the plurality of updated graph vectors to generate an updated matching query vector, and computing the matching score comprises computing the matching score based on the updated matching query vector.

(Iteratively) updating the at least one object query vector based on the plurality of graph vectors may comprise adding and/or updating at least one value of the at least one object query vector based on the plurality of graph vectors.

(Iteratively) updating the at least one object query vector based on the plurality of graph vectors may comprise updating the at least one object query vector based on a correlation between the at least one object query vector and the plurality of graph vectors.

(Iteratively) updating the at least one object query vector based on the plurality of image vectors may comprise adding and/or updating at least one value of the at least one object query vector based on a plurality of the image vectors.

(Iteratively) updating the at least one object query vector based on the plurality of image vectors may comprise updating the at least one object query vector based on a correlation between the at least one object query vector and a plurality of the image vectors.

(Iteratively) updating the plurality of graph vectors based on the at least one object query vector may comprise adding and/or updating at least one value of at least one of the graph vectors based on at least one of the at least one object query vector.

(Iteratively) updating the plurality of graph vectors based on the at least one object query vector may comprise updating at least one of the graph vectors based on a correlation between at least one of the at least one object query vector and the plurality of graph vectors.

(Iteratively) updating the at least one object query vector based on the plurality of graph vectors may comprise updating the at least one object query vector based on a correlation between the at least one object query vector and the plurality of graph vectors; and/or (iteratively) updating the at least one object query vector based on the plurality of image vectors may comprise updating the at least one object query vector based on a correlation between the at least one object query vector and a plurality of the image vectors; and/or (iteratively) updating the plurality of graph vectors based on the at least one object query vector may comprise updating at least one of the graph vectors based on a correlation between at least one of the at least one object query vector and the plurality of graph vectors.

Iteratively updating the input matching query vector based on the at least one object query vector and the plurality of graph vectors may comprise updating at least one value of the input matching query vector based on the at least one object query vector and the plurality of graph vectors.

Iteratively updating the input matching query vector based on the at least one object query vector may comprise updating the input matching query vector based on a correlation between the at least one object query vector and the input matching query vector, and iteratively updating the input matching query vector based on the plurality of graph query vectors may comprise updating the input matching query vector based on a correlation between the plurality of graph query vectors and the input matching query vector.

(Iteratively) updating the input matching query vector may comprise updating the input matching query vector based on a similarity/correlation between the at least one object query vector and the plurality of graph vectors.

The update process may comprise using attention-based networks/mechanisms / attention schemes.

(Iteratively) updating the at least one object query vector based on the plurality of graph vectors may comprise using an attention-based network/attention scheme or attention network/mechanism (to determine the correlation).

(Iteratively) updating the at least one object query vector based on the plurality of image vectors may comprise using an attention-based network/attention scheme or attention network/mechanism (to determine the correlation).

(Iteratively) updating the plurality of graph vectors based on the at least one object query vector may comprise using an attention-based network/attention scheme or attention network/mechanism (to determine the correlation).

Iteratively updating the input matching query vector based on the at least one object query vector and the plurality of graph vectors may comprise using an attention-based network/attention scheme or attention network/mechanism (to determine the correlation).

The input scene graph may comprise a mask node.

The mask node (may be connected to at least one other node of the input scene graph and) may not include information about the object or relation or action it represents.

The mask node may not include a label.

The mask node may represent an object or relation or action to be predicted.

(Iteratively) updating the plurality of graph vectors based on the at least one object query vector may comprise adding and/or updating information in the graph vectors indicating a mask node based on information of at least one object in the input image.

The computer-implemented method may further comprise extracting information about the mask node from the plurality of updated graph vectors to predict a label (an object or relation or action) of the mask node based on the input image.

The input scene graph may comprise a mask node for which a label is to be predicted, and the computer-implemented method may comprise extracting information about the mask node from the plurality of updated graph vectors and/or the at least one updated object query vector to predict a label (an object or relation or action) of the mask node based on the input image.

Generating the plurality of graph vectors may comprise encoding the input scene graph (or using an encoder).

The input scene graph may comprise (respective nodes representing) at least one object and at least one of a relation (related to the at least one object) or an action (related to the at least one object).

The input scene graph may comprise first and second objects and a relation between the first and second objects.

Generating the plurality of graph vectors may comprise encoding information of the at least one object and the at least one relation or action into the plurality of graph vectors.

Generating the plurality of graph vectors may comprise encoding the input scene graph using a self-attention network/mechanism or a message passing mechanism.

Encoding the image may comprise using a (transformer-based) self-attention network/mechanism.

The object query vectors before the update process may not comprise information about any object to be detected.
may comprise he object query vectors before the update process may be initialized with values not related to the input scene graph or the input image.

The input matching query vector before the update process may be initialized with values not related to the input scene graph or the input image or the object query vectors.

The update process may comprise (iteratively) updating the plurality of graph vectors based on the plurality of image vectors.

The update process may comprise (iteratively) updating the input matching query vector based on the plurality of image vectors.

The at least one object query vector may comprise a plurality of object query vectors and the update process may comprise (iteratively) updating each of the plurality of object query vectors based on at least one other of the plurality of object query vectors.

The update processing may comprise updating each of the plurality of graph vectors based on at least one other of the plurality of graph vectors.

The at least one object query vector may comprise a plurality of object query vectors and the update process may comprise (iteratively) updating each of the plurality of object query vectors based on at least one other of the plurality of object query vectors and/or the update process may comprise (iteratively) updating each of the plurality of graph vectors based on at least one other of the plurality of graph vectors.

The update process may comprise iterating the update steps a predefined number of times or for a predefined length of time.

The update process may comprise iterating the update steps in a random order in each iteration.

The input scene graph may comprise a first node representing a first object, a second node representing a relation, and a mask node, wherein the second node is connected between the first node and the mask node.

The input scene graph may comprise information indicating a target node, and the computer-implemented method may comprise selecting at least one detected object as corresponding to the target node.

According to an embodiment of a second aspect there is disclosed herein a computer-implemented method comprising, based on an input scene graph, performing the computer-implemented method according to the first aspect a plurality of times with different input images, respectively, wherein the input images are a series of images from a video, and wherein the method comprises selecting at least one object detected in a plurality of the input images as a target node.

According to an embodiment of a third aspect there is disclosed herein a computer-implemented method comprising, based on an input scene graph, performing the computer-implemented method according to the first aspect a plurality of times with different input images, respectively, to find at least one of the input images which is most similar to the input scene graph.

The computer-implemented may comprise ranking the input images based on their matching scores.

The computer-implemented may comprise selecting at least one of the input images with the highest matching score.

The input images may be a series of images from a video.

According to an embodiment of a fourth aspect there is disclosed herein a computer-implemented method according to the first aspect in which the input image and the input scene graph are a training image and a training scene graph, respectively, and are associated with at least one of a training region, training category, a training mask node label, and training matching score (as ground truth data), and the computer-implemented method further comprises comparing at least one of the region, category, mask node label, and matching score with at least one of the training region, training category, training mask node label, and training matching score, respectively, and updating at least one network weight based on the comparison.

Comparing the at least one of the region, category, mask node label, and matching score with the at least one of the training region, training category, training mask node label, and training matching score may comprise computing an error therebetween, and wherein updating the at least one network weight may comprise updating the at least one network weight based on the error.

Updating the at least one network weight may comprise updating at least one network weight of at least one the attention-based networks/mechanisms or self-attention networks/mechanisms.

Updating the at least one network weight may comprise updating weights of each attention-based network/mechanism and self-attention network/mechanism.

According to an embodiment of a fifth aspect there is disclosed herein a computer-implemented method comprising performing a training process a plurality of times with a plurality of pairs of training scenes and training input images, the training process comprising/being the computer-implemented method according to the fourth aspect.

The computer-implemented method may further comprise performing/iterating/repeating the training process until (an iteration in which) the error converges or is below an error threshold.

The computer-implemented method may further comprise performing/iterating/repeating the training process until (a predefined number of successive iterations in which) the error is below an error threshold.

The computer-implemented method may further comprise performing/iterating/repeating the training process a predefined number of times.

The computer-implemented method may further comprise performing the computer-implemented method according to the second or third aspects subsequently.

According to an embodiment of a sixth aspect there is disclosed herein a computer program which, when run on a computer, causes the computer to carry out a method comprising: based on an input/query scene graph, generating a plurality of graph vectors; encoding an input image to generate a plurality of image vectors; performing an update process (decoder processing) to update the plurality of graph vectors and at least one object query vector to generate a plurality of updated graph vectors and at least one updated object query vector, wherein the update process comprises: (iteratively) updating the at least one object query vector based on the plurality of graph vectors (so that the at least one object query vector includes information indicating at least one object in the scene graph); (iteratively) updating the at least one object query vector based on the plurality of image vectors (with information indicating at least one (relevant) object detected in the input image); and (iteratively) updating the plurality of graph vectors based on the at least one object query vector (with information indicating at least one (relevant) object detected in the input image); extracting from the at least one updated object query vector information indicating a region of at least one object (detected in the input image) and a category/class of the at least one object; and computing a matching score indicating a similarity between the (detected at least one object in the) input image and the input scene graph based on (a similarity/correlation between) the at least one updated object query vector and the plurality of updated graph vectors.

According to an embodiment of a seventh aspect there is disclosed herein an information processing apparatus comprising a memory and a processor connected to the memory, wherein the processor is configured to: based on an input/query scene graph, generate a plurality of graph vectors; encode an input image to generate a plurality of image vectors; perform an update process (decoder processing) to update the plurality of graph vectors and at least one object query vector to generate a plurality of updated graph vectors and at least one updated object query vector, wherein the update process comprises: (iteratively) updating the at least one object query vector based on the plurality of graph vectors (so that the at least one object query vector includes information indicating at least one object in the scene graph); (iteratively) updating the at least one object query vector based on the plurality of image vectors (with information indicating at least one (relevant) object detected in the input image); and (iteratively) updating the plurality of graph vectors based on the at least one object query vector (with information indicating at least one (relevant) object detected in the input image); extract from the at least one updated object query vector information indicating a region of at least one object (detected in the input image) and a category/class of the at least one object; and compute a matching score indicating a similarity between the (detected at least one object in the) input image and the input scene graph based on (a similarity/correlation between) the at least one updated object query vector and the plurality of updated graph vectors.

Features relating to any aspect/embodiment may be applied to any other aspect/embodiment.

Reference will now be made, by way of example, to the accompanying drawings, in which:
Figure 1 is a diagram illustrating a comparative method;
Figure 2 is a diagram illustrating a comparative method;
Figure 3 is a diagram illustrating a comparative method;
Figure 4 is a diagram illustrating a system;
Figure 5 is a diagram useful for understanding embodiments;
Figure 6 is a diagram useful for understanding update processing;
Figure 7 is a diagram illustrating a method;
Figure 8 is a diagram illustrating a system;
Figure 9 is a diagram illustrating results useful for understanding embodiments;
Figure 10 is a diagram illustrating an implementation example;
Figure 11 is a diagram illustrating a method;
Figure 12 is a diagram illustrating a system;
Figure 13 is a diagram illustrating an implementation example;
Figure 14 is a diagram illustrating an implementation example; and
Figure 15 is a diagram illustrating an apparatus.

The following terms may be used in the description (neither the list nor the definitions are exhaustive).

Neural network: A machine learning network modelled on the human brain.

Image encoder: Processing for encoding data of an image in an alternative way to the input image, for example in the form of image vectors rather than pixels. May include compression.

Attention mechanism: A technique that is meant to mimic cognitive attention. This effect enhances some parts of the input data while diminishing other parts-the motivation being that the network should devote more focus to the important parts of the data, even though they may be a small portion of an image or sentence. An attention mechanism may also be considered to extract information from the important parts of the data to e.g. update an object.

Graph encoder: Processing for encoding a graph as a set of vectors. For example, may represent nodes as a concatenation of their embeddings and positional embeddings, node relations as the shortest paths between them, and combine both in a relation-augmented self-attention.

Scene graph: A graph indicating a specific combination of at least one object and at least one relation and/or action (or "predicate"). For example, a scene graph may indicate objects and their relationships to each other in an image. That is, a scene graph may correspond to the logical/spatial representation of a graphical scene.

In order to find a specific combination of e.g. an object and an action in an input image, neural networks (NNs) may be used to detect the objects (e.g., dogs, persons, cars, etc.) and actions (e.g. standing, sitting, walking, etc.) in an input image. Then, those detected candidates may be filtered in post-processing to find specific objects (e.g., running black dog). Furthermore, given an input in the form of text (a text string), another NN may be used to predict a matching score between the text input and the input image.

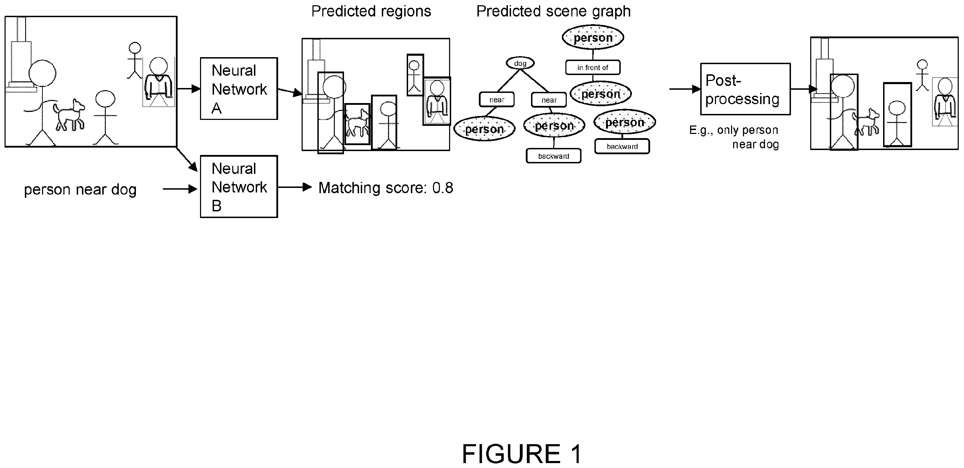

For example, Figure 1 is a schematic diagram of a comparative method in line with the methodology described above. The comparative method is for detecting a specific combination of objects and/or actions and/or relations in an input image. In the comparative example the specific combination to be detected is "person near dog".

As shown in Figure 1, a first NN, NN A, is used to detect all objects in the input image. A scene graph is predicted based on the detected objects. Post-processing is required to detect the specific combination ("person near dog"). Separately, a second NN, NN B, is used to compute a matching score between the input image and a text string indicating the specific combination to be detected in the input image (in this case, "person near dog", for example).

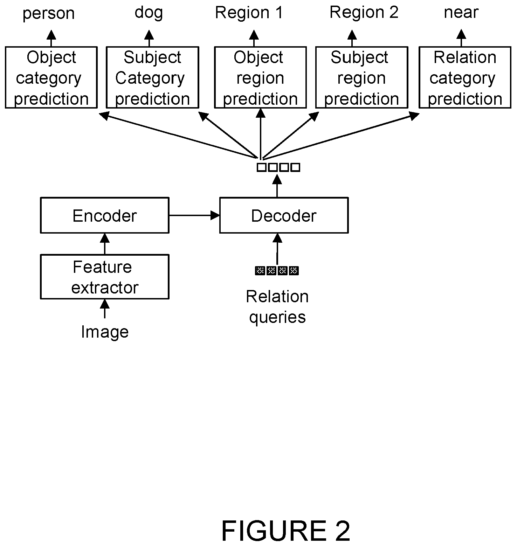

Figure 2 is a schematic diagram illustrating another comparative method. The comparative method illustrated in Figure 2 may be used for detecting objects in the comparative method illustrated in Figure 1. The comparative method illustrated in Figure 2 may be referred to as comparative method 1.

Comparative method 1 may be referred to as a scene graph generation (SGG) method. Comparative method 1 comprises receiving an image as an input, and predicting the object regions, their categories, and the relationships between the objects. A disadvantage of comparative method 1 is that post-processing is required to find specific combinations of objects and actions/relations, for example as was required in the method illustrated in Figure 1. Furthermore, when comparative method 1 is used for the detection of objects in the method illustrated in Figure 1, another method (and another NN) is required to compute a matching score between specific combinations of objects and actions/relations and the input image. Furthermore, using comparative method 1 it is difficult to predict abnormal objects (e.g. "pink elephant") because such abnormal objects are out-of-distribution.

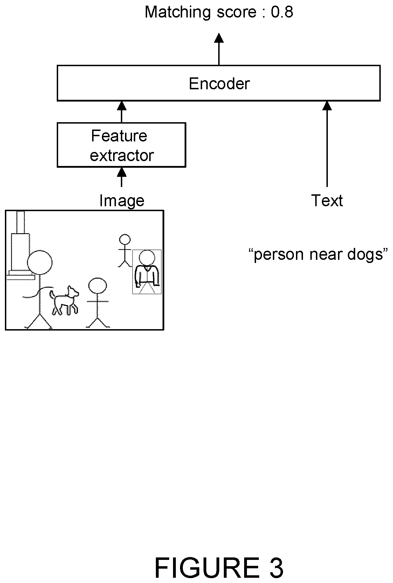

Figure 3 is a schematic diagram illustrating another comparative method. The comparative method illustrated in Figure 3 may be used for computing a matching score between a text input and an input image, e.g. in the comparative method illustrated in Figure 1 (when the text input defines a specific combination of objects and relations/actions). The comparative method illustrated in Figure 3 may be referred to as comparative method 2.

As shown in Figure 3, an image and a text string are received as inputs and the comparative method comprises predicting a matching score between the image and the text string. A disadvantage of comparative method 2 is that a region and category of a target object cannot be directly predicted (for example when performing the method illustrated in Figure 1 the comparative method 1 is required as well as the comparative method 2). Furthermore, the predicted score may be difficult to interpret in some cases.

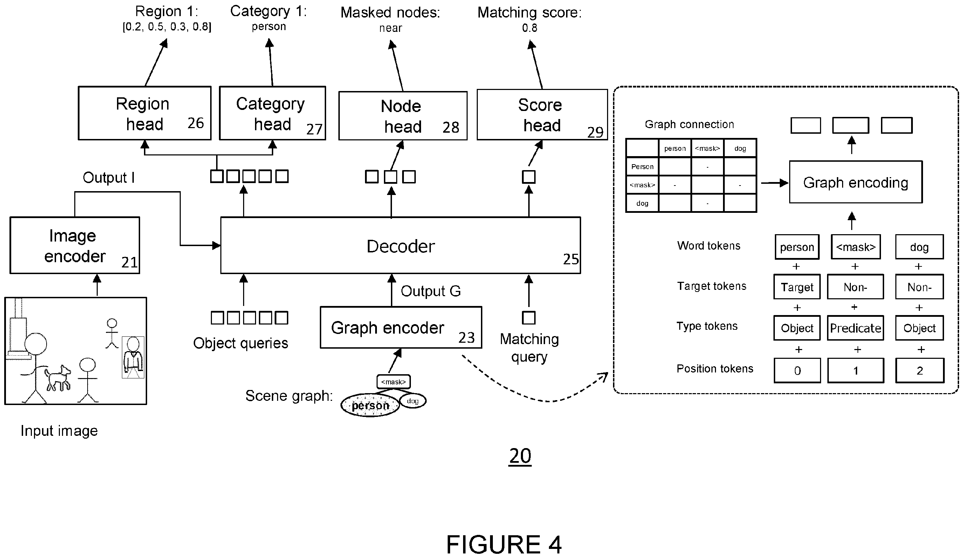

Figure 4 is a schematic diagram illustrating a system 20. System 20 is for detecting a scene (i.e. a combination of at least one object and at least one action or relation) in an input image. The system 20 receives as inputs an input image and a scene graph and outputs information indicating at least one object detected in the input image which corresponds to the scene graph and a matching score between the input image and the scene graph.

System 20 comprises an image encoder 21, a graph encoder 23, a decoder 25, a region head 26, a category head 27, a node head 28, and a score head 29. The region head 26, category head 27, node head 28, and score head 29 may be referred to as a region prediction unit, a category prediction unit, a node prediction unit, and a score prediction unit, respectively. Figure 4 illustrates some inputs and outputs. An input image (an example of which is shown in Figure 4) is input to the image encoder 21, which outputs Output I to the decoder 25. Object queries (which may be referred to as object query vectors) and a matching query (which may be referred to as a matching query vector or an input matching query vector) are input to the decoder 25. A scene graph (an example of which is shown in Figure 4) is input to the graph encoder 23 which outputs Output G to the decoder 25.

The image encoder 21 generates image vectors and outputs them (as Output I) to the decoder 25. The graph encoder 23 generates graph vectors and outputs them (as Output G) to the decoder 25. The decoder 25 updates the object queries, the matching query, and the graph vectors (the encoded scene graph), based on the image vectors (the encoded image), the object queries, and the graph vectors. This updating may be referred to as update processing. The decoder thereby generates updated object queries (or object query vectors) and an updated matching query (or matching query vector).

The "head" units extract specific information from the outputs of the decoder 25. That is, the region head 26 extracts (information indicating) a region of at least one detected object from the updated object queries. The category head extracts (information indicating) a category of the at least one detected object from the updated object queries. The score head extracts (information indicating) a matching score from the updated matching query.

The scene graph input to the graph encoder 23 may include a "mask node" (or "masked node"). A mask node is a node in the scene graph which does not include information about the object or relation or action it represents. Put another way, the mask node is a node in the scene graph which does not include a label. The mask node may be considered to represent an object or action or relation to be predicted. In other words, it may be said that the mask node is connected to at least one other node of the input scene graph and does not include a label.

The decoder 25 outputs updated graph vectors. When the scene graph used comprises a mask node, the node head 28 extracts from the updated graph vectors information indicating a label of the mask node.

The node head 28 is not essential and other implementations of the system 20 may not comprise the node head 28, for example implementations in which the scene graph does not have a mask node.

Figure 4 includes some example data. Based on the example input image and the example scene graph (which includes a mask node), a region (in the form of coordinates) and a category ("person") of at least one object in the input image is predicted, the label "near" is predicted for the mask node, and a matching score of "0.8" is predicted indicating a similarity between the scene graph and the input image.

Figure 4 illustrates (on the right-hand-side) an example implementation of the graph encoder 23. The graph encoder in this specific example implementation works by deducing the graph connections (i.e., to which node(s) each node is connected) and by extracting and classifying tokens from the node labels in the scene graph. This may be accomplished using a self-attention network/mechanism (e.g. as described in G. Mialon et al. GraphiT: Encoding Graph Structure in Transformers) or a message passing mechanism (e.g. Graph Neural Networks).

In the example inputs described with respect to Figure 4, a plurality of object queries is included. In other examples only one object query may be included. Therefore the input may comprise at least one object query.

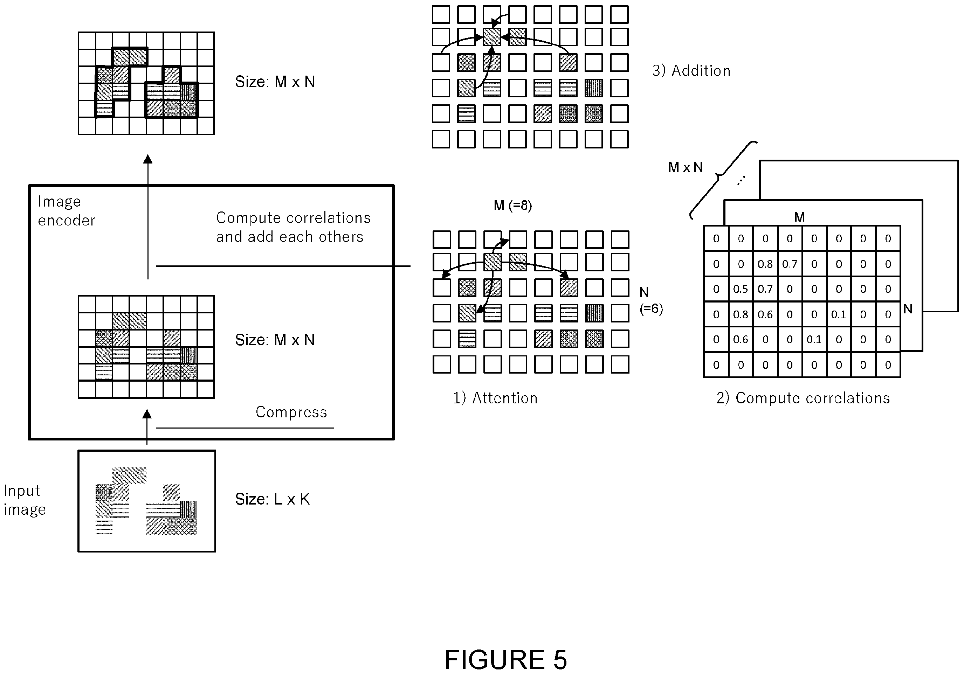

Figure 5 is a schematic diagram illustrating an example image encoding process of the image encoder 21. The image encoder 21 in this example implementation compresses the image (from size LxK to size MxN, for example) and computes correlations and additions. The encoding process is to make values of similar regions closer so that objects in the image are able to be distinguished. The image encoder 21 may employ a transformer-based network with an attention mechanism. An example implementation of the process of computing correlations and additions is shown in Figure 5 as steps 1-3.

Provisional vectors are generated based on the input image so that the input image is represented as a plurality of provisional vectors. To generate provisional vectors, a neural network may be used, for example a convolutional neural network (e.g. ResNet). This will result in, for example, a compressed image as vectors (MxN). A provisional vector may be considered to represent a region of the input image. The provisional vectors are updated using an attention mechanism as described below.

Step 1 comprises using an attention mechanism/network on the provisional vectors. The attention mechanism/network enhances some parts of the data while diminishing other parts, the motivation being that the more focus ought to be devoted to the important parts of the data.

Step 2 comprises computing correlations between each provisional vector and each other provisional vector after step 1. In Figure 5 an example grid/table/matrix of size MXN is illustrated. This matrix is populated with values indicating the computed correlation between one of the provisional vectors with every other provisional vector (and itself). A number, S, of the matrixes are generated and populated, where S=MxN. That is, one matrix is generated and populated for every provisional vector. A number of correlation algorithms/methods may be used, for example the dot product or cosine similarity may be used to compute the correlation scores (may be referred to as attention scores).

Step 3 comprises an addition step. Here, for each provisional vector, the correlation values are multiplied by their corresponding provisional vectors, respectively, and summed. For example, considering a first provisional vector of the image in Figure 5, the correlation value between this first provisional vector and a second provisional vector is multiplied by the second provisional vector, and this is added to the sum, and the correlation value between the first provisional vector and a third provisional vector is multiplied by the third provisional vector and this is added to the sum, so on and so forth, up to the Sth provisional vector. The result of the sum is a first image vector (corresponding to the first provisional vector), which is output by the image encoder 21 as part of the plurality of image vectors. The multiplication and summing process is repeated for the second provisional vector and the result of the sum is a second image vector (corresponding to the second provisional vector), which is output by the image encoder 21 as part of the plurality of image vectors. The process is carried out for each provisional vector.

The steps 1-3 may be considered a single step of updating the provisional vectors using an attention mechanism. For example, a key-query-value attention mechanism may be used, e.g. to determine attention scores and perform a weighted sum to update the provisional vectors.

The encoding process described above with reference to Figure 5 is merely an example.

The image encoder 21 in this implementation example compresses the image, however this is not essential. Furthermore, there exist other processes for generating image vectors based on an image and the image encoder 21 is not limited to the implementation example in Figure 5.

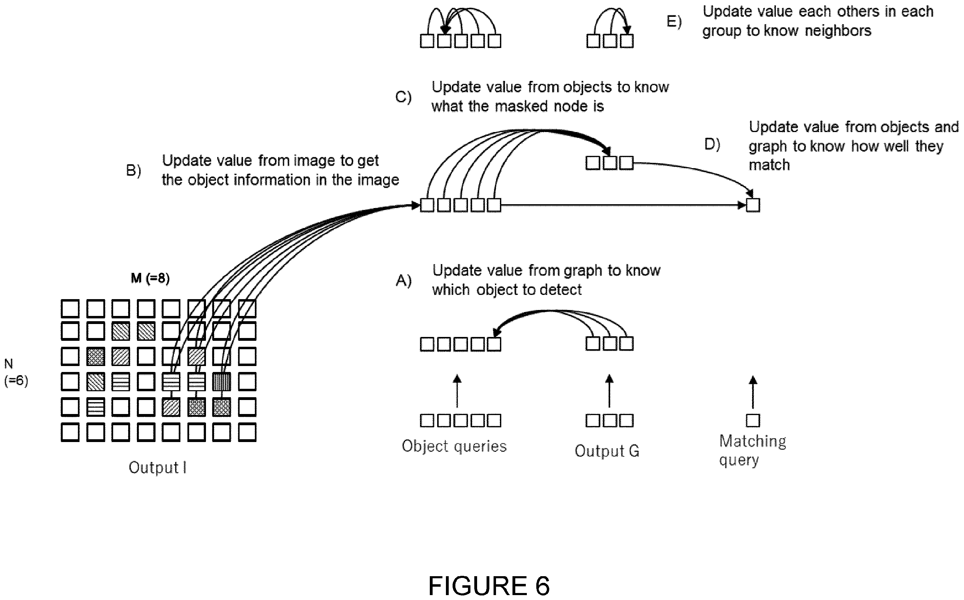

Figure 6 is a schematic diagram illustrating an example implementation of the update process performed by the decoder 25, comprising steps A-E. The update process is to update the at least one object query (or object query vector), the graphs vectors, and the matching query to generate at least one updated object query, a plurality of updated graph vectors, and an updated matching query vector.

Step A comprises updating the at least one object query based on the graph vectors. This may be considered as updating the at least one object query vector based on the plurality of graph vectors so that the at least one object query vector includes information indicating at least one object in the scene graph. The step A update may be considered to comprise adding and/or updating at least one value of the at least one object query vector based on the plurality of graph vectors. Step A may be considered to comprise updating value(s) in the object query(ies) from the graph to know which object to detect.

Step B comprises updating the at least one object query vector based on the plurality of image vectors. This may be considered as updating the at least one object query vector based on the plurality of image vectors with information indicating at least one (relevant) object detected in the input image (here, "relevant" may be taken to mean that the information regarding the object is based on the scene graph/graph vectors). The step B update may be considered to comprise adding and/or updating at least one value of the at least one object query vector based on a plurality of the image vectors. For example, a value of the object query vector may be updated based on a plurality of the image vectors which correspond to a particular object. Step B may be considered to comprise updating a value using the image to get object information from the image in the object query.

Step C comprises updating the plurality of graph vectors based on the at least one object query vector. This may be considered as updating the plurality of graph vectors based on the at least one object query vector with information indicating at least one (relevant) object detected in the input image (here, "relevant" may be taken to mean that the object corresponds with an object in the scene graph, i.e., described by the graph vectors). The step C update may be considered to comprise adding and/or updating at least one value of at least one of the graph vectors based on at least one of the at least one object query vector. For example, a value of a graph vector may be updated based on an object query vector corresponding to a particular object (detected in the image).

As previously described, a mask node may not be included in the scene graph, and so the associated processing is not essential. If a mask node is included in the scene graph then step C may be considered to comprise adding and/or updating information in the graph vectors indicating a mask node based on information of at least one object in the input image. Step C may be considered to comprise updating a value in the graph vectors from object information (in the object query) to aid in determining what the masked node is (i.e. determining a label for the masked node). However, even if a mask node is not included in the scene graph, some mask node-related processing may be carried out and may improve detection accuracy because, for example the information from the scene graph can be made more concreate, e.g., what kind of dog is near a man (black or white, sitting or standing, etc.).

Step D comprises updating the matching query vector based on the at least one object query vector and the plurality of graph vectors. This may be considered as updating the matching query vector with information indicating at least one object detected in the input image from the object query vector and with information indicating at least one object in the scene graph from the graph vectors. The step D update may be considered to comprise updating at least one value of the input matching query vector based on the at least one object query vector and the plurality of graph vectors. Step D may be considered to comprise updating the matching query to know how well the graph and detected objects match, i.e., how well the graph vectors and object query vector match.

Any updates or added values may depend on a correlation between the vectors concerned. For example, some correlations are described as follows.

Updating the at least one object query vector based on the plurality of graph vectors (step A) may comprise updating the at least one object query vector based on a correlation between the at least one object query vector and the plurality of graph vectors.

Updating the at least one object query vector based on the plurality of image vectors (step B) may comprise updating the at least one object query vector based on a correlation between the at least one object query vector and a plurality of the image vectors. It will be appreciated that such a correlation-based update of the at least one object query based on image vectors may lead to the at least one object query being updated with information indicating an object indicated by the at least one object query (before the update) and present in the image, i.e. indicated by information in the image vectors. Furthermore, it is noted that the image vectors include information about related and/or similar regions. I.e. an image vector for a region includes information about other regions, e.g. their similarity and/or relationship with the region concerned. Therefore if a correlation is present between an object query indicating an object in the scene graph and image vectors indicating regions in the image, this correlation may be at least partly based on a correlation between the scene graph object's relationship with another object in the scene graph and the image region/object's relationship to and/or similarity with other regions/objects in the image.

Updating the plurality of graph vectors based on the at least one object query vector (step C) may comprise updating at least one of the graph vectors based on a correlation between at least one of the at least one object query vector and the plurality of graph vectors. It will be appreciated that such a correlation-based update may lead to information being added to the graph vectors which is "relevant", i.e. information of an object/action/relation which is present in the input image.

Updating the input matching query vector based on the at least one object query vector (step D) may comprise updating the input matching query vector based on a correlation between the at least one object query vector and the input matching query vector. Updating the input matching query vector based on the plurality of graph query vectors (step D) may comprise updating the input matching query vector based on a correlation between the plurality of graph query vectors and the input matching query vector.

Updating the input matching query vector (step D) may comprise updating the input matching query vector based on a similarity/correlation between the at least one object query vector and the plurality of graph vectors. For example, the updated matching query vector may be considered a vector based on the similarity/correlation between the at least one object query vector and the graph vectors.

The update process may comprise using attention-based networks/mechanisms or attention schemes. That is, any of the steps A-C may comprise using an attention-based network/attention scheme or attention network/mechanism, for example to determine a correlation between the two vectors concerned. Correlation may be referred to as attention score. It will be appreciated that high similarity between two sets of information will result in a high attention score (high correlation).

The update process illustrated in Figure 6 comprises step E. Step E comprises, when there are a plurality of object query vectors, updating each of the plurality of object query vectors based on at least one other of the plurality of object query vectors. Any of the above considerations for steps A-C may apply to this update. This update may be considered useful for two reasons (among others). (i) For example in a case where multiple object queries comprise information about the same object (i.e. are "detecting" the same object) - in this case this update may aid in avoiding the "double detection" because the information about the object can be consolidated into one of the object queries. (ii) Another reason that this update is useful is because an object query may be updated with information relating to another object detected by a different object query. This is advantageous for example because an aim of the methodology disclosed herein is detecting scenes in images and the scenes may comprise information indicating a relationship between two objects.

Step E further comprises updating each of the plurality of graph vectors based on at least one other of the plurality of graph vectors. This update may be considered useful for reason ii above.

The update process may also comprise updating the graph vectors and/or the matching query vector based on the image vectors directly. Any of the above considerations may apply to this update step.

In an implementation example the update process comprises performing the updates iteratively for a certain number of iterations/length of time. The steps A-E may be performed in any order. The steps may be performed in a different order in some iterations. The update process in some implementation examples may not comprise step E and/or step D.

In implementations in which step D is not included, the decoder 25 may compute a correlation/similarity between the updated graph vectors and the updated at least one object query vector to generate an updated matching query vector. Alternatively, the score head 29 may compute a correlation/similarity between the updated graph vectors and the updated at least one object query vector to generate an intermediate vector. In this case (where the score head 29 computes the similarity), a matching query may not be input to the decoder 25.

In order to extract a matching score from a vector (i.e. the updated matching query vector or an intermediate vector), the score head 29 may reduce the vector to a 1 dimensional vector an then use an activation function to extract a value. This value may be normalized to generate the matching score. A simple multi-layer perceptron may be employed to extract a matching score (e.g. composed of a first linear layer, an activation, and a second linear layer).

As indicated herein, a scene graph may be stored in the form of linked data nodes.

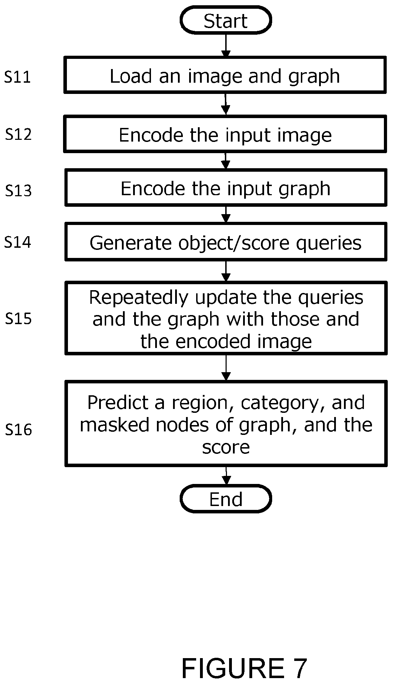

Figure 7 illustrates a method. The method may be performed by the system 20. The method is for detecting a scene (i.e. a combination of at least one object and at least one action or relation) in an input image.

Step S11 comprises loading an input image and a scene graph.

Step S12 comprises encoding the input image. This step may comprise the encoding process described above with reference to Figure 5. This step may be performed by the image encoder 21.

Step S13 comprises encoding the scene graph (which may be referred to as an input graph). This step may be performed by the graph encoder 23.

Step S14 comprises generating object and matching score queries.

Step S15 comprises repeatedly (iteratively) updating the queries and the graph vectors with each other and with the encoded image. Step S15 may comprise the encoding process described above with respect to Figure 6.

Step S16 comprises predicting a region and category of at least one object in the input image (and corresponding to the input graph), the masked node(s) for the input graph (i.e. a label for any masked node), and a matching score indicating a similarity between the input image and the input graph. The scene graph input may comprise information indicating which node is a "target". This may be in the form of a label or information included in a label. Step S16 in this case comprises preferentially predicting the region/category of the object corresponding to the target in the input scene graph. Alternatively, the object corresponding to the target could be selected after the processing of predicting a region and category of at least one object in the input image. In such a way, aspects disclosed herein may be used in object detection tasks. That is, an object which corresponds to (is in) a particular scene graph may be detected using methods disclosed herein.

In some implementation examples the method may not comprise (at least some of) step S14. At least one object query and/or a matching query may be provided directly rather than generated.

It will be appreciated that the method of Figure 7 corresponds with the functions of the system 20 illustrated in Figure 4 and features/aspects of one may apply to the other.

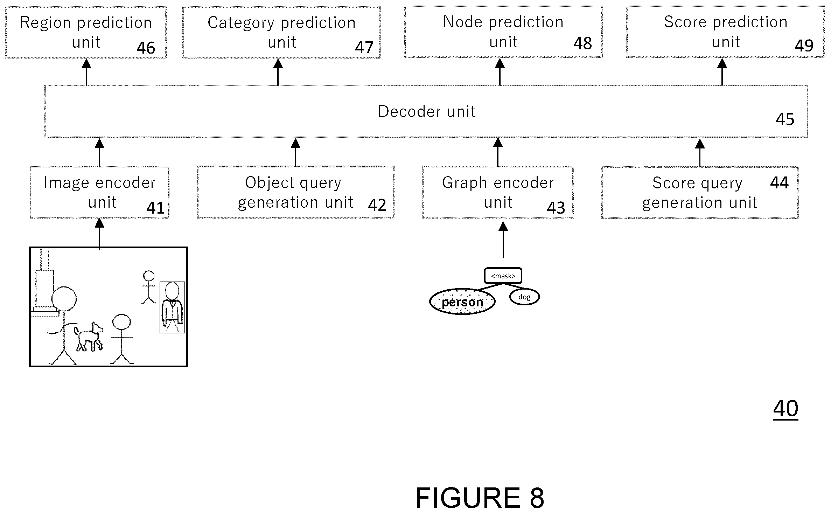

Figure 8 illustrates a system 40. System 40 is for detecting a scene (i.e. a combination of at least one object and at least one action or relation) in an input image. The system 40 receives as inputs an input image and a scene graph and outputs information indicating at least one object detected in the input image which corresponds to the scene graph and a matching score between the input image and the scene graph. System 40 may be considered to carry out the method in Figure 7.

System 40 comprises an image encoder 41, an object query generation unit 42, a graph encoder 43, a score query generation unit 44, a decoder 45, a region prediction unit 46, a category prediction unit 47, a node prediction unit 48, and a score prediction unit 49. Figure 4 illustrates an input image and an input scene graph. System 40 corresponds with system 20 and corresponding elements have been given corresponding reference signs, and duplicate description is omitted.

The system 40 additionally comprises the object query generation unit 42 and the score query generation unit 44 for generating at least one object query and a matching query (or at least one object query vector and a matching query vector). The system 40 in other implementation examples may not comprise the object query generation unit 42 and/or the score query generation unit 44 and the at least one object query and/or matching query may be provided directly. The object query vector and the matching query vector may be initialized with values not related to the input image or scene graph, for example with random values or predetermined values, or "zeroes". That is, the vectors may be considered "blank".

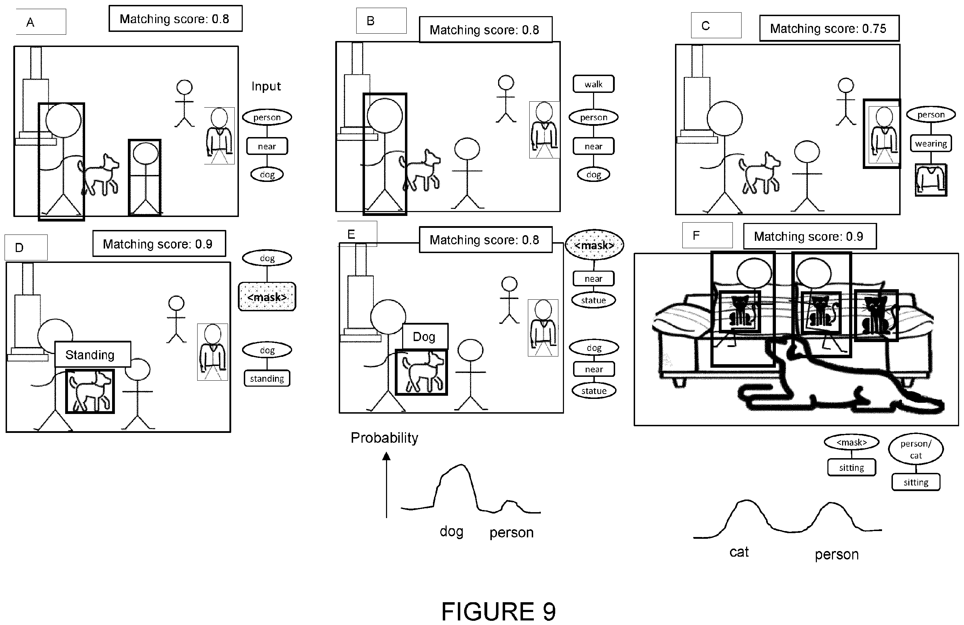

Figure 9 illustrates some input images, input scene graphs, and results.

In part A, the scene graph comprises two nodes labelled "person" and "dog", connected via a node labelled "near". Two people are detected in the input image (with bounding boxes) as corresponding to the object(s) in the scene graph and a matching score of 0.8 is predicted. In this example, the node "person" is the target.

In part B, the scene graph comprises two nodes labelled "person" and "dog", connected via a node labelled "near", with a further node labelled "walk" connected to the "person" node. One person is detected in the input image as corresponding to the object(s) in the scene graph and a matching score of 0.8 is predicted. In this example, the node "person" is the target.

In part C, the scene graph comprises a node labelled "person" connected to a node labelled "wearing", and the node labelled "wearing" is connected to a node labelled with an image of a coat. One person is detected in the input image as corresponding to the object(s) in the scene graph and a matching score of 0.75 is predicted. In this example, the node "person" is the target. Incidentally, it is noted that a node is labelled with an image in this example. A label for a node may comprise text and/or an image and/or sound. It may be considered that an image or sound is converted to a vector.

In part D, the scene graph comprises a node labelled "dog" connected to a masked node. A dog is detected in the input image as corresponding to the object(s) in the scene graph and the label "standing" is predicted for the mask node based on the input image. A matching score of 0.9 is predicted. In this example, the node "dog" is the target.

In part E, the scene graph comprises a masked node connected via a node labelled "near" to a node labelled "statue". A dog is detected in the input image as corresponding to the object(s) in the scene graph and the label "dog" is predicted for the mask node based on the input image. A matching score of 0.8 is predicted. In this example, the mask node is the target.

Underneath part E a graph illustrates a probability of two detected objects - "dog" and "person". That is, it may be considered that the dog and also a person are both detected as objects in the input image (i.e. information of these objects is added to the object query vectors) and the probability may be considered to indicate the correlation of the object query vectors representing the dog and the person with the graph vectors. In some implementations, an object threshold is employed so that only objects with a probability or "correlation" above a threshold are extracted from the object query vectors as "detected objects". In some implementations, any objects represented by the updated object query vectors are extracted as detected objects. In some implementations the number of detected objects depends on the number of object query vectors. For example, in part E, if there is only one object query vector, then even though the "person" could feasibly be detected as an object corresponding to the scene graph, only the "dog" is detected (because, for example, the "dog" has a higher probability/correlation).

In part F, a different input image is used (compared to A-E). The scene graph comprises a masked node connected to a node labelled "sitting". Multiple people and a cat are detected in the input image as corresponding to the object(s) in the scene graph and the label "person/cat" (i.e. two labels - "person" and "cat") is predicted for the mask node based on the input image. A matching score of 0.9 is predicted. Underneath part F a graph illustrates a probability of two detected objects - "cat" and "person". In contrast to part E, in this case the probabilities (i.e. the correlation with the graph vectors) of the objects are similar (and, for example, both may be considered above a threshold) so that the region and category prediction units predict both objects as corresponding to the object(s) in the scene graph. It may be considered that in the case of part F there are multiple object query vectors so that multiple objects may be detected in the image. In part F the masked node may be considered to be used as a wild card. In this example, the mask node is the target.

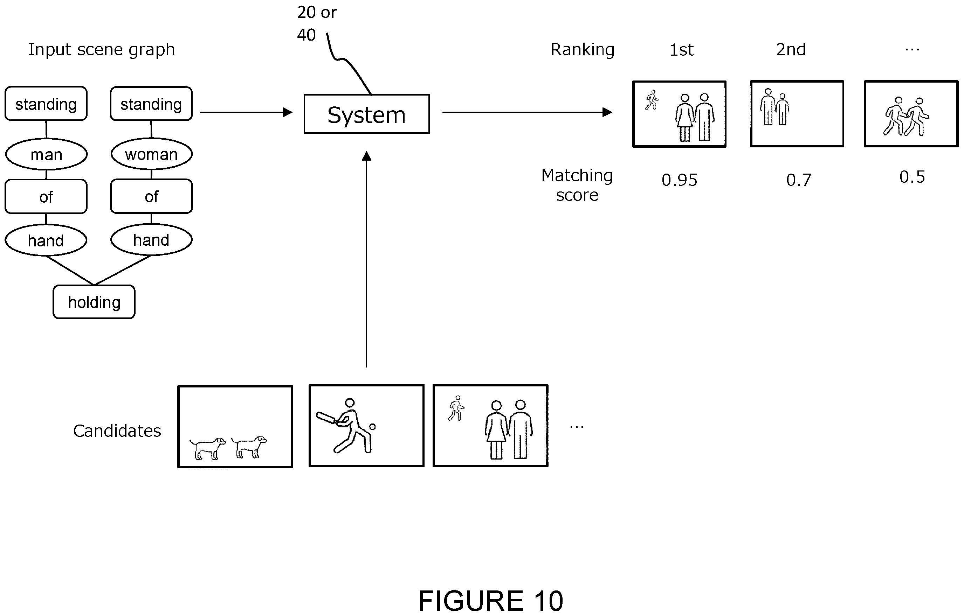

Figure 10 illustrates an implementation example using the system 20 or 40 and the methodology disclosed herein for finding at least one input image among a plurality of input images that best matches a scene graph (which is most similar to the scene graph). Here, multiple input images are received instead of just one. A scene graph is also received as input. The system 20 or 40 carries out the methods/processes described above for each input image (i.e. tries to detect object(s) in the image corresponding to object(s) in the scene graph and predicts a matching score indicating a similarity between the input image and the scene graph). The input images may then be ranked based on their matching scores and at least one image may be selected as the best match(es) for the scene graph.

The system 20 or 40 may be configured to carry out the implementation example illustrated in Figure 10 (i.e. may be configured to rank the input images and/or select at least one "best match"). The disclosure provides for a method and/or apparatus/system for carrying out the implementation example of Figure 10.

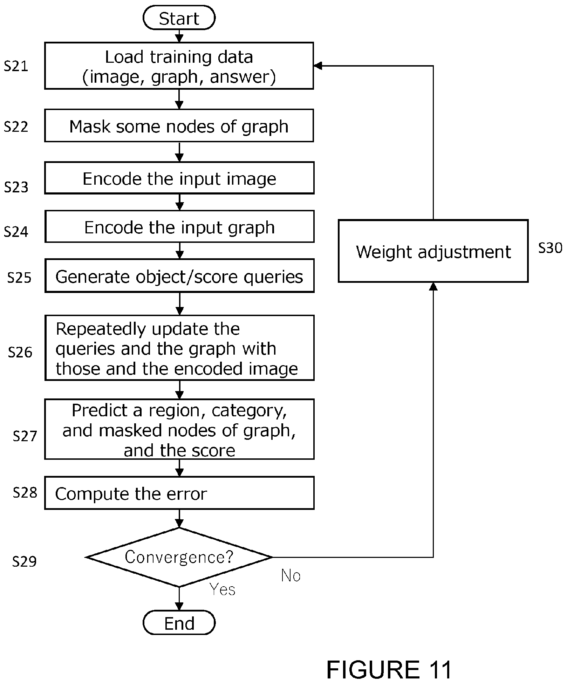

Figure 11 illustrates a method of training a system 20 or 40 and/or method illustrated in Figure 7. Step S21 comprises loading training data which comprises at least one input image and at least one scene graph, and information indicating the object(s) in the at least one input image corresponding to the object(s) in the scene graph and a matching score between the at least one input image and the at least one scene graph. The training data may be human-annotated.

Steps S22-S29 relate to one iteration of a training process which comprises performing the method of Figure 7 and then computing an error based on the difference between the obtained result and the result indicated by the training data. The one iteration is based on a combination of an input image and a scene graph.

Step S22 comprises masking at least one node of the scene graph concerned, i.e. removing the label of at least one node. This step is not essential. This step may be carried out in only some iterations (or none).

Step S23 comprises encoding the input image to generate image vectors, step S24 comprises encoding the scene graph to generate graph vectors, and step S25 comprises generating object and score/matching queries. This step may instead comprise being provided with the queries.

Step S26 comprises performing the update process to generate updated vectors as previously described. Step S27 comprises predicting a region and category of at least one detected object, predicting a label for the masked node, and predicting a matching score, as previously described.

Step S28 comprises comparing the result to the result indicated by the training data (which acts as ground truth data) and computing an error therebetween. The error may comprise a difference between the predicted matching score and the matching score indicated by the training data. Any standard loss may be employed, e.g. any loss for a classification problem, such as cross entropy loss.

Step S29 comprises determining whether the error has converged. Step S29 may comprise determining whether the error is and has been less than a threshold error for a particular number of iterations, for example. If the error has converged (yes) then the training process ends. If the error has not converged (no) then the process proceeds to step S30. Step S30 comprises a weight adjustment. Step S30 comprises adjusting at least one weight of at least one network used by the image or graph encoder 21, 23 or decoder 25. That is the weight adjustment may be performed on at least one of the attention networks/mechanisms therein.

After step S30 the process returns to step S21 and another combination of a training input image and a training scene graph is loaded.

The training process may comprise a predetermined number of iterations (for example instead of iterating until error convergence). The training process may not comprise step S21 and instead the training images and scene graphs may be loaded in a step preceding the training process.

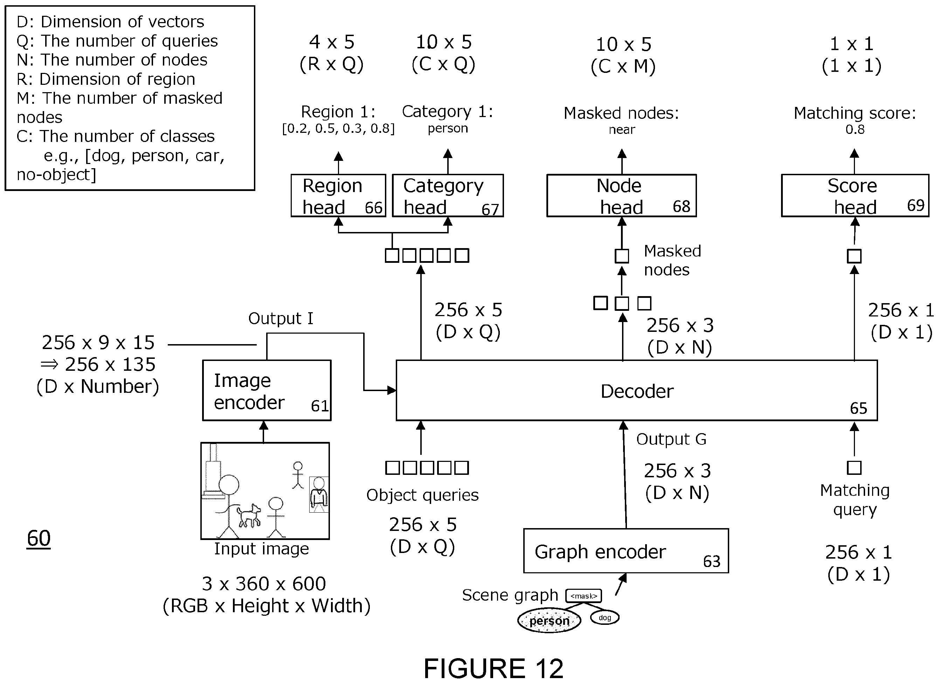

Figure 12 is a schematic diagram illustrating a system 60. System 60 corresponds to the systems 20 and 40 and corresponding reference signs have been used, and duplicate description is omitted. Figure 12 includes information regarding the size and number of vectors at various stages of the processing of the system 60 in a particular example, useful for understanding but not limiting on the present invention. This information may apply to the systems 20 and 40 and the methods disclosed herein. Incidentally, the size of compressed image depends on the convolutional neural network (CNN), which has a compression rate. In the example of Figure 12, a CNN with a rate of 4 has been used.

As illustrated, the region prediction may be in the form of coordinates of a bounding box.

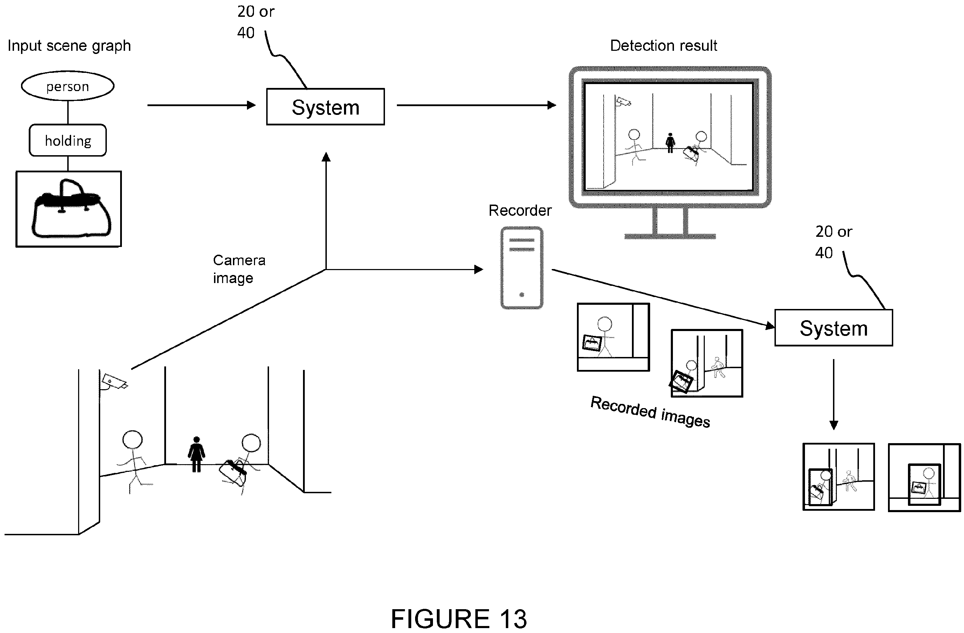

Figure 13 is a schematic diagram illustrating an example use of the system 20 or 40 or any method described herein. In Figure 13 the disclosed methodology is used to find a person who is holding a bag. For example this could be useful in finding a person who has stolen the bag, or for finding a person holding a particular bag based on a description of a perpetrator of a crime.

The scene graph is a node labelled "person" connected via a node labelled "holding" to a node labelled with the image of the bag. The input images in this case are stills from a video recording. The processing described with reference to Figure 10 is used, for example, to find at least one image which best matches the scene graph. The detected object(s) (in this case the person holding the bag) is output. The matching score may also be output. As shown in the lower portion of Figure 13, the system 20 or 40 may be used to track the scene - i.e. to track the person holding the bag based on a series of recorded images/stills. In this case, the node labelled "person" is the target. This use of the invention may be considered object tracking.

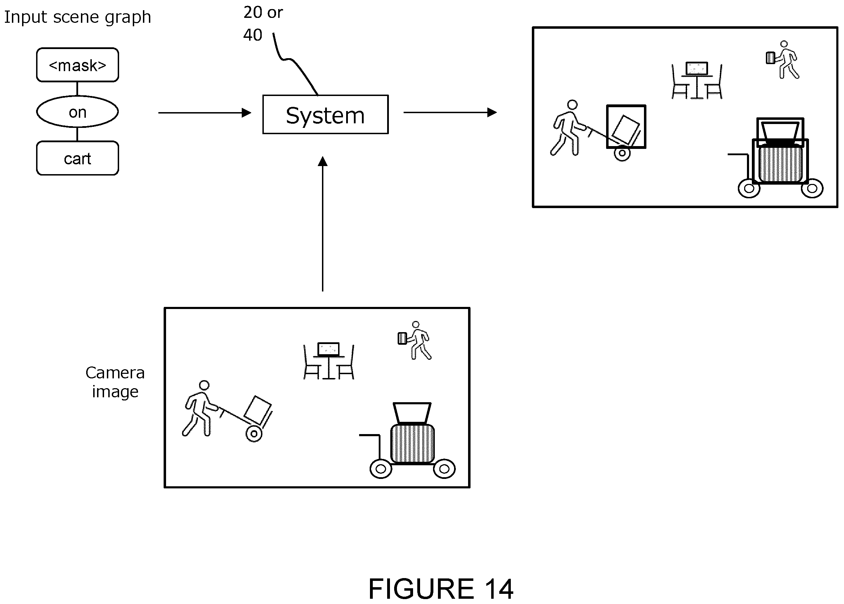

Figure 14 is a schematic diagram illustrating another example use of the system 20 or 40 or any method described herein. In Figure 14 the disclosed methodology is used to find object(s) placed on a cart. The scene graph is a mask node connected to a node labelled "cart" via a node labelled "on". The system detects, in the input image shown in the example, two objects each placed on a cart. The system may also output a matching score.

The aspects disclosed herein are able to detect specific target objects, motions, scenes with a single unified input without post-processing. That is, a specific combination of at least one object and at least one action or relation is able to be detected in an input image without requiring post-processing, and a matching score is also able to be generated without requiring a separate post-processing phase (or a separate NN as in the previous methods discussed above).

Aspects disclosed herein may be considered to relate to a method for detecting specific objects, motions, scenes from an input image with a scene graph as a single unified input query, eliminating post-processing to filter the targets and improve the detection accuracy by specifying the targets and their attributes using the scene graph as priors.

Drawings are shown as the images in the Figures. It will be appreciated that photos may be used.

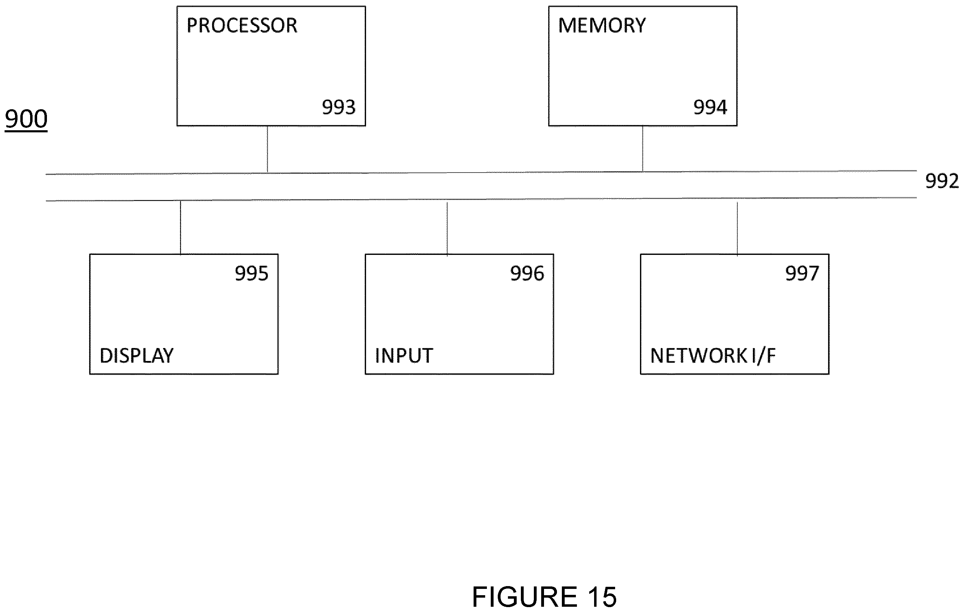

Figure 15 is a block diagram of an information processing apparatus 900 or a computing device 900, such as a data storage server, which embodies the present invention, and which may be used to implement some or all of the operations of a method embodying the present invention, and perform some or all of the tasks of apparatus of an embodiment. The computing device 900 may be used to implement any of the method steps described above, e.g. any of steps S11-S16 and/or S21-S30.

The computing device 900 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S11-S16 and/or S21-S30. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store at least one input image and/or at least one scene graph and/or at least one weight of at least one network and/or at least one vector and/or at least one error and/or at least one prediction and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as a representation of predictions (e.g. bounding boxes) and/or a representation of a "best match" image and/or GUI windows and/or interactive representations enabling a user to interact with the apparatus 900 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 900 such as that illustrated in Figure 15. Such a computing device need not have every component illustrated in Figure 15, and may be composed of a subset of those components. For example, the apparatus 900 may comprise the processor 993 and the memory 994 connected to the processor 993. Or the apparatus 900 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:
based on an input scene graph, generating a plurality of graph vectors;
encoding an input image to generate a plurality of image vectors;
performing an update process to update the plurality of graph vectors and at least one object query vector to generate a plurality of updated graph vectors and at least one updated object query vector, wherein the update process comprises:
updating the at least one object query vector based on the plurality of graph vectors;
updating the at least one object query vector based on the plurality of image vectors; and
updating the plurality of graph vectors based on the at least one object query vector;
extracting from the at least one updated object query vector information indicating a region of at least one object and a category of the at least one object; and
computing a matching score indicating a similarity between the input image and the input scene graph based on the at least one updated object query vector and the plurality of updated graph vectors.

2. The computer-implemented method as claimed in claim 1, wherein the update process comprises:
iteratively updating the at least one object query vector based on the plurality of graph vectors; and/or
iteratively updating the at least one object query vector based on the plurality of image vectors; and/or
iteratively updating the plurality of graph vectors based on the at least one object query vector.

3. The computer-implemented method as claimed in claim 1 or 2, wherein the update process comprises updating an input matching query vector to generate an updated matching query vector, wherein the updating of the input matching query vector comprises updating an input matching query vector based on the at least one object query vector and the plurality of graph vectors to generate an updated matching query vector, and wherein computing the matching score comprises computing the matching score based on the updated matching query vector.

4. The computer-implemented method as claimed in any of the preceding claims, wherein:
updating the at least one object query vector based on the plurality of graph vectors comprises updating the at least one object query vector based on a correlation between the at least one object query vector and the plurality of graph vectors; and/or
updating the at least one object query vector based on the plurality of image vectors comprises updating the at least one object query vector based on a correlation between the at least one object query vector and a plurality of the image vectors; and/or
updating the plurality of graph vectors based on the at least one object query vector comprises updating at least one of the graph vectors based on a correlation between at least one of the at least one object query vector and the plurality of graph vectors.

5. The computer-implemented method as claimed in any of the preceding claims, wherein updating the input matching query vector comprises updating the input matching query vector based on a similarity between the at least one object query vector and the plurality of graph vectors.

6. The computer-implemented method as claimed in any of the preceding claims, wherein the input scene graph comprises a mask node for which a label is to be predicted, and wherein the computer-implemented method comprises extracting information about the mask node from the plurality of updated graph vectors and/or the at least one updated object query vector to predict the label of the mask node based on the input image.

7. A computer-implemented method comprising, based on an input scene graph, performing the computer-implemented method as claimed in any of the preceding claims a plurality of times with different input images, respectively, to find at least one of the input images which is most similar to the input scene graph.

8. The computer-implemented method as claimed in claim 7, comprising ranking the input images based on their matching scores, and selecting at least one of the input images with the highest matching score.

9. The computer-implemented method as claimed in claim 7 or claim 8, wherein the input images are a series of images from a video.

10. The computer-implemented method as claimed in any of claims 1-6, wherein the input image and the input scene graph are a training image and a training scene graph, respectively, and are associated with at least one of a training region, training category, a training mask node label, and training matching score, and wherein the computer-implemented method further comprises comparing at least one of the region, category, mask node label, and matching score with at least one of the training region, training category, training mask node label, and training matching score, respectively, and updating at least one network weight based on the comparison.

11. A computer-implemented method comprising, based on an input scene graph, performing the computer-implemented method as claimed in any of claims 1-6 a plurality of times with different input images, respectively, wherein the input images are a series of images from a video, and wherein the method comprises selecting at least one object detected in a plurality of the input images as a target node.

12. The computer-implemented method as claimed in any of the preceding claims, wherein updating the at least one object query vector based on the plurality of graph vectors comprises using an attention-based network or attention network.

13. The computer-implemented method as claimed in any of the preceding claims, wherein updating the at least one object query vector based on the plurality of image vectors may comprise using an attention-based network or attention network.

14. A computer program which, when run on a computer, causes the computer to carry out a method comprising:
based on an input scene graph, generating a plurality of graph vectors;
encoding an input image to generate a plurality of image vectors;
performing an update process to update the plurality of graph vectors and at least one object query vector to generate a plurality of updated graph vectors and at least one updated object query vector, wherein the update process comprises:
updating the at least one object query vector based on the plurality of graph vectors;
updating the at least one object query vector based on the plurality of image vectors; and
updating the plurality of graph vectors based on the at least one object query vector;
extracting from the at least one updated object query vector information indicating a region of at least one object and a category of the at least one object; and
computing a matching score indicating a similarity between the input image and the input scene graph based on the at least one updated object query vector and the plurality of updated graph vectors.

15. An information processing apparatus comprising a memory and a processor connected to the memory, wherein the processor is configured to:
based on an input scene graph, generate a plurality of graph vectors;
encode an input image to generate a plurality of image vectors;
perform an update process to update the plurality of graph vectors and at least one object query vector to generate a plurality of updated graph vectors and at least one updated object query vector, wherein the update process comprises:
updating the at least one object query vector based on the plurality of graph vectors;
updating the at least one object query vector based on the plurality of image vectors; and
updating the plurality of graph vectors based on the at least one object query vector;
extract from the at least one updated object query vector information indicating a region of at least one object and a category of the at least one object; and
compute a matching score indicating a similarity between the input image and the input scene graph based on the at least one updated object query vector and the plurality of updated graph vectors.
